# EUROPEAN PATENT SPECIFICATION

(11) **EP 1 840 858 B1**
(45) Date of publication and mention of the grant of the patent: **01.10.2008**
(21) Application number: 07380064.1
(22) Date of filing: 06.03.2007
(51) Int. Cl.: G08G 1/14, G08G 1/017, G08G 1/123

(54) **System for estimating the location of vehicles in parking lots**
System zur Schätzung der Position von Fahrzeugen in Parkplätzen
Système d'estimation de l'emplacement de véhicules dans des parcs de stationnement

(30) Priority: 06.03.2006 ES 200600540
(43) Date of publication of application: 03.10.2007
(73) Proprietor: Quality Informations System, S.A., 28224 Madrid (ES)
(72) Inventor: Riesco Prieto, Pablo, 28023 Madrid (ES); Riesco Prieto, Javier, 28023 Madrid (ES)
(74) Representative: Carvajal y Urquijo, Isabel

(56) References cited:
- WO-A-00/46068
- WO-A-20/05022485
- JP-A- 2003 233 898

## Description

The invention is comprised within systems for locating vehicles in enclosed areas, intended for locating these vehicles, in certain physical spaces.

### Background of the Invention

The existence of systems for reading license plates and systems for detecting occupied spaces are known.

Systems for reading license plates in parking lots have basically been used to control authorized vehicles, wanted vehicles (so-called black-listed vehicles) or to associate a certain license plate with a receipt number, for example.

Systems for controlling occupied spaces have also existed for some time, and they are used to know which areas of the parking lot have free spaces through systems guiding users who are driving a vehicle by means of displays with the number of free spaces, etc.

Document WO 00/46068-A1 discloses a computerized parking facility management system which is able to locate vehicles inside the parking lot. A search tool allows the user to search for a specified vehicle inside the parking facility according to different parameters. The invention in said document employs ultrasonic sensors located over the parking facility entrance to obtain the vehicle's contour when the vehicle accesses the parking facility and ultrasonic sensors mounted over each parking space to capture the vehicle's contour when the vehicle pulls into a parking space. By comparing the contours detected at the parking entrance and the contours detected at the parking spaces, it can be determined where a vehicle is exactly located. However, this system estimates the location of the vehicle in the parking lot in a complicated way, and with difficulty when multiple vehicles of the same manufacturer and model enter the parking facility consecutively. Furthermore, there can be several models of different vehicle manufacturers with a similar contour, so that the ultrasonic sensors may identify a car wrongly, as a different model.

### Description of the Invention

It has therefore been considered that a system is needed that allows locating in a specific moment the range of spaces associated to the inside of a parking lot where the specific vehicle is most likely parked.

The invention relates to a system for estimating the location of vehicles in parking lots as defined claim 1.

The system can be configured so that the control points, responsible for at least reading the license plates of the cars, are at least located at the parking lot entrances, although they may also be at the exits and/or on the access ramps and the ramps for accessing other floors, and/or in the passage ways and/or in inner lanes of the parking lot communicating different areas of the parking lot in the same floor.

The system can be configured to continuously receive on one hand the information provided by the detection means relating to the numbers of parking lot spaces that are occupied or free and the time in which each of them is occupied or free; and on the other hand, the information provided by the reading means relating to the license plate readings taken at the different parking lot control points and the date and time in which said readings are taken.

The control mechanism will be configured so that it can evaluate which spaces have gone from being free to being occupied after the last reading point of the license plate of that vehicle, limiting the group of possible spaces to those that can be accessed from that control point. Therefore, the control mechanism is configured to establish, by means of a probability calculation, an arrangement, from the lowest to the highest, of the list of possible spaces (in which it is possible that the car to be located may be parked), taking into account:
the information contained in the mentioned data A, and data B, and,
the modulus of the difference between the estimated theoretical time of the routes existing between the last reading point and each space, and the time in which each of the spaces is actually occupied after this last reading taken by the control point.

The estimated pre-established times of the routes existing between each control point and each space can either be assigned manually for each of them or a digitalized map containing the location of the spaces, the control points, the areas, ramps, passage ways, etc. can be entered in the system and the system itself will calculate the estimated times. The estimated times of the routes can in turn vary according to the level of traffic and occupation of the parking lot.

The output means can be configured to send the report containing the list with the numbers of space in which it is possible that the vehicle is parked at least to a device selected from a mobile telephone, through an SMS (Short Message Service; hereinafter SMS), a PDA (Personal Digital Assistant; hereinafter PDA), a computer screen, a printer, and combinations thereof.

If the parking lot is divided into different zones or areas, the system may also provide in which area the vehicle may be parked and in which it is not.

The system can be configured such that the precision of the system may be conditioned essentially by the size of the parking lot, the physical arrangement of the roads inside said parking lot, and the number of license plate control points.

### Brief Description of the Invention

A series of drawings which aid to better understand the invention and which are expressly related with an embodiment of said invention are briefly described below, presented as an illustrative and non-limiting example thereof.
Figure 1 is a block diagram of the system, showing a series of functional modules of a preferred embodiment of the invention.
Figure 2 is a detailed view of the invention.
Figure 3 is a flowchart of the steps of the system.

### Description of a Preferred Embodiment of the Invention

The present invention relates to a system which allows knowing at a certain time in which spaces of a parking a vehicle is most likely parked, and in which spaces it is impossible for the vehicle to be parked. Before this point, obviously the vehicle has accessed the inside of the parking lot and has found a free space to park, which space is identified at least with a space number.

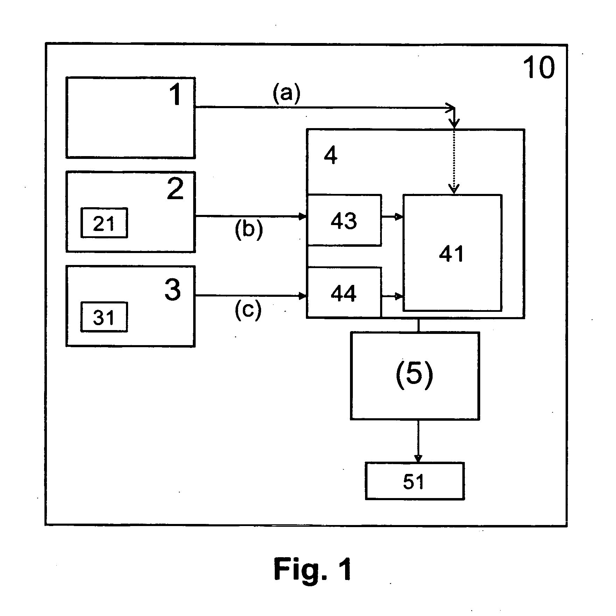

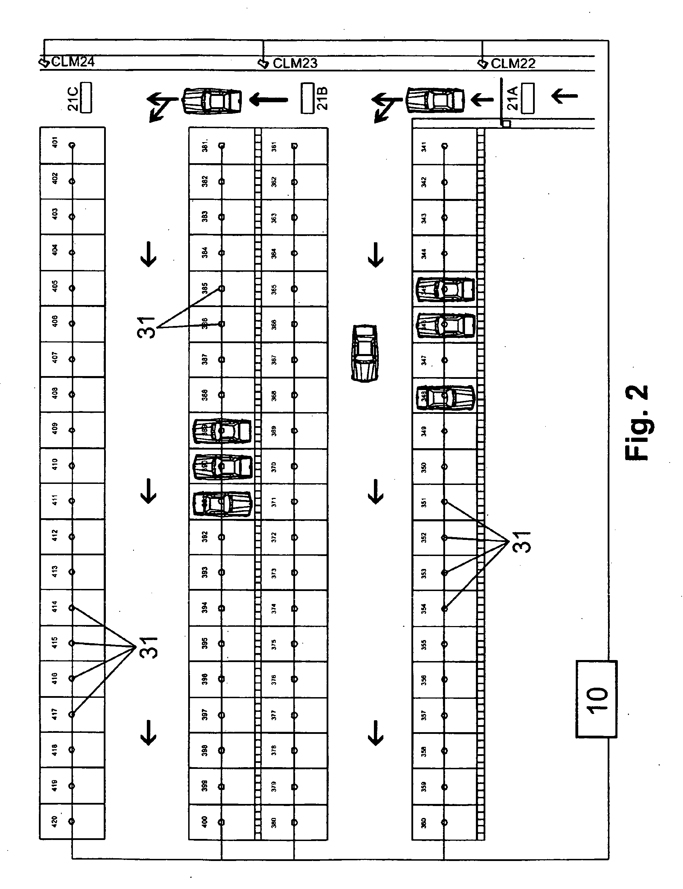

As is shown in Figures 1 and 2, the system (10) for estimating the location of vehicles, hereinafter the system, having:
reading means (2) configured to read data A corresponding to the license plate of a car that has accessed the inside of a parking lot through a plurality of control points (21) which will be located at least at the parking lot entrance;
detection means (3) configured to record data B indicating a change of availability status, selecting from free or occupied, of the spaces of the parking lot;
in which the reading means (2), through a plurality of control points (21), capture at least the following information corresponding to data A: vehicle license plate number, exact date and time of this capture;
in which the detection means (3) record at least the following information corresponding to data B: space number, the availability status of the spaces, exact date and time in which a vehicle has parked in a space;
is characterized in that it comprises:
input means (1) configured to manually enter a license plate number corresponding to a vehicle to be located inside a parking lot,
location means (4) configured to locate the vehicle inside the parking lot,
output means (5) configured to generate a report (51);
the reading means (2), detection means (3) and location means (4) being operatively related (b, c), such that, by making use of the previously recorded information through:
   the input means (1),
   a first receiver (43), configured to receive data A (this device is responsible for receiving the information captured by the control points, distributed throughout the parking lot, relating to the license plates of the cars circulating through the different roads of the parking lot), and
   a second receiver (44) configured to receive data B (this device is responsible for receiving data which have previously been recorded by the detection means, i.e. they receive information relating to the change of status corresponding to a space when a vehicle either parks in said space or leaves it),
   the location means (4) can determine, by means of a control mechanism (41), a list of possible spaces in which the vehicle may be located inside the parking lot.

In this preferred embodiment according to Figure 2, in the parking lot there are three control points, identified as CLM22 (21A), CLM23 (21B) and CLM24 (21C); assuming that the license plate number of the vehicle which has parked in space number 390 is as follows: 1234BCD.

The system (10) receives the indicating data A from the reading means (2) through the receiver (43) A, together with the indicating data B from the detection means (3) through the receiver (44) B, to be used by this system (10) when the vehicle with license plate 1234BCD, which has been parked beforehand, is to be located.

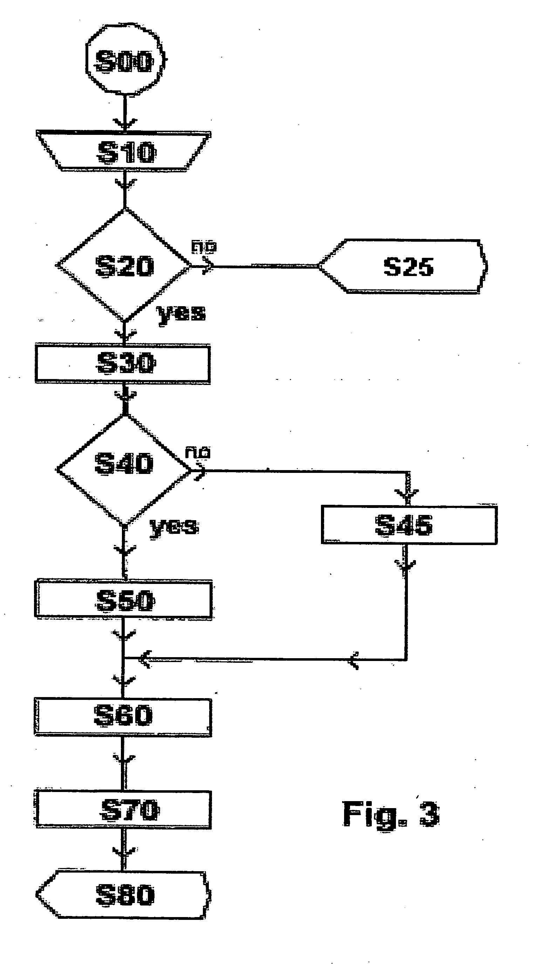

Figure 3 shows the sequence of steps describing the system (10) when the vehicle with license plate 1234BCD is to be located, the system being started in step P00.

The system (10) is configured so that the license plate, in this case license plate 1234BCD, of the vehicle to be located, is manually entered through the input means (1), through step P10.

In step P20, the system verifies whether or not the license plate to be located is stored in a reading file compiling all the license plate readings corresponding to the vehicles that are parked inside the parking lot. Two situations may occur; in the first situation, according to step P25, the license plate 1234BCD is not in the reading file that the system (10) contains, the latter being configured to display a message corresponding to the non-location of the vehicle attempted to be located; the second situation occurs when license plate 1234BCD is contained in the reading file of the system (10), and then the system continues to step P30 to assign the license plate a date A0, a time A0 and the control point CLM22 (21 A), the latter corresponding to the control point which is at least located at the parking lot entrance.

After that, the system (10) is configured so that the vehicle with license plate 1234BCD can be located through a control mechanism (41) comprised in the location means (4) of the system (10).

To that end, in step P40 the system (10) asks if license plate 1234BCD to be located has been read by the subsequent control points (21B or 21 C) which are located inside the parking lot, excluding the point at the entrance (21 A). Two situations may occur:
the first situation occurs according to step P45, when the license plate has not been read by the inner points (21 B or 21 C), after which the system assigns, on one hand, date A0 to date A1, time A0 to time A1, in which it is considered that date A1 and time A1 correspond to data associated to the last reading of the vehicle to be located, and on the other hand assigns point (21) as last control point, i.e. in this step P45, when the wanted license plate is read only in the control point at the parking lot entrance, the data collected by the system (10) by means of the corresponding control point (21A) located at the parking lot entrance, are considered as the data of the last reading of the license plate of the vehicle to be located inside the parking lot;
the second of the two situations corresponds with step P50, occurring when the license plate of the vehicle to be located (in this preferred embodiment license plate 1234BCD) has been read by control points (21 B, 21 C) located inside the parking lot and which does not correspond with control point (21 A) at the entrance. The data corresponding to this last reading of the license plate are considered as date A1, time A1.

While the system (10) has identified the date A1, time A1 and the corresponding control point (21A, 21B or 21C, in this preferred embodiment) through step P45 or step P50, the system (10) continues to step P60.

After that and through the mentioned step P60, the control mechanism (41) is configured so that it can look for and identify the spaces that can be accessed from the last control point which read the wanted license plate (according to the embodiment of Figure 2, those comprised between number 381 and number 420), and which have changed in status, going from being free to being occupied, from date A1 and time A1 corresponding to the last reading of the license plate of the vehicle to be located taken by the control point (in this case, camera CLM23 corresponding to control point 21 B, took the last reading of license plate 1234BCD in date A1 and time A1), up to a time interval after time A1, which can be identified as date A2, time A2.

Furthermore, through step P70 the control mechanism (41) is also configured to arrange from the lowest to the highest, by the order of probability, the spaces having a status that has gone from being free to being occupied after date A1 and time A1; this order is marked at least according to the modulus of the difference between the time elapsed between date A1, time A1 and the date and time each of the spaces is occupied, and the estimated theoretical time for each of the routes existing between the last reading control point (21) in which the wanted license plate was read and each space.

After that, the system (10) is configured to generate a report (51) in step P80, through the output means (5), which report may contain the possible spaces which the vehicle is most likely parked in. These output means (5) will likewise be configured to send the report (51) to a device, this device possibly being a mobile telephone, a PDA, a computer screen, a printer and combinations thereof.

Other variants of the invention relate to the particular case in which the parking lot is divided into zones or areas, the system (10) may provide which areas the vehicle may be parked in and which it is not.

The system (10) is considered to be particularly useful in cases in which there is a car bomb threat inside a parking lot and the license plate of said car has been provided.

## Claims

1. A system (10) for estimating the location of vehicles in parking lots, the system comprising:
- reading means (2) configured to capture at least the following information corresponding to first data A: license plate number of a vehicle accessing the inside of a parking lot, exact date and time of this capture,
- detection means (3) configured to record, through a plurality of sensors (31), second data B indicating a change of availability status, selecting from free and occupied, of the parking lot spaces, said second data B including at least the following information: space number, the availability status of the spaces, exact date and time in which a vehicle has parked in the space,
- input means (1) configured to manually enter a license plate number corresponding to a vehicle to be located inside a parking lot,
- location means (4) configured to locate said vehicle inside the parking lot,
- output means (5) configured to generate a report (51),
- a first receiver (43) configured to receive data A, and
- a second receiver (44) configured to receive data B;
the reading means (2) and detection means (3) being connected to the location means (4), **characterized in that** the reading means (2) are installed in a plurality of control points (21A, 21B, 21C) inside the parking lot, each reading means (2) capturing the location of the control point in which they are installed, and including said information in the first data A;
**in that** the location means (4), by making use of the previously recorded information through:
the input means (1),
the first receiver (43), and
the second receiver (44),
and by means of a control mechanism (41) including a probability calculation, can determine a list of possible spaces in which the vehicle may be located inside the parking lot, said control mechanism (41) being configured to calculate the mentioned list taking into account:
the information contained in the mentioned data A, and data B,
an estimated theoretical time associated to each route comprised between the control point which took a last reading of the license plate and each of the spaces of the parking lot which have been occupied in a time interval after the moment in which this last reading of the license plate has been taken; and,
the modulus of the difference between the estimated theoretical time established for each route existing between that last reading point and each space, and the time elapsed between this last reading was taken and the time in which each of the spaces is occupied.

2. A system (10) according to claim 1, **characterized in that** the output means (5) are configured to send the report (51) at least to a device selected from a mobile telephone, by means of an SMS, a PDA, a computer screen, a printer, and combinations thereof.

## Patentansprüche

1. System (10) zum Schätzen der Position von Fahrzeugen auf Parkplätzen, wobei das System Folgendes umfasst:
- Lesemittel (2), die dafür konfiguriert sind, mindestens die folgenden Informationen, die ersten Daten A entsprechen, zu erfassen: das Nummernschild eines Fahrzeugs, das auf einen Parkplatz auffährt, das genaue Datum und die genaue Uhrzeit dieser Erfassung,
- Detektionsmittel (3), die dafür konfiguriert sind, mit Hilfe mehrerer Sensoren (31) zweite Daten B aufzuzeichnen, die eine Änderung des Verfügbarkeitsstatus' - wobei zwischen frei und besetzt gewählt wird - der Parkflächen anzeigen, wobei die zweiten Daten B mindestens die folgenden Informationen beinhalten: die Parkflächennummer, den Verfügbarkeitsstatus der Parkflächen, das genaue Datum und die genaue Uhrzeit, wann ein Fahrzeug auf der Parkfläche einparkte,
- Eingabemittel (1), die dafür konfiguriert sind, manuell ein Nummernschild einzugeben, das einem Fahrzeug entspricht, das auf einem Parkplatz lokalisiert werden soll,
- Lokalisierungsmittel (4), die dafür konfiguriert sind, das Fahrzeug auf dem Parkplatz zu lokalisieren,
- Ausgabemittel (5), die dafür konfiguriert sind, einen Bericht (51) zu erzeugen,
- einen ersten Empfänger (43), der dafür konfiguriert ist, Daten A zu empfangen, und
- einen zweiten Empfänger (44), der dafür konfiguriert ist, Daten B zu empfangen;
wobei die Lesemittel (2) und die Detektionsmittel (3) mit dem Lokalisierungsmittel (4) verbunden sind, **dadurch gekennzeichnet, dass** die Lesemittel (2) an mehreren Kontrollpunkten (21A, 21B, 21C) auf dem Parkplatz installiert sind, wobei jedes Lesemittel (2) die Position des Kontrollpunktes erfasst, an dem es installiert ist, und die Informationen in die ersten Daten A integriert;
dass die Lokalisierungsmittel (4) durch Verwenden der Informationen, die zuvor durch:
die Eingabemittel (1),
den ersten Empfänger (43) und
den zweiten Empfänger (44)
aufgezeichnet wurden, und mit Hilfe eines Steuerungsmechanismus' (41), der eine Wahrscheinlichkeitsberechnung enthält, eine Liste möglicher Parkflächen erstellen können, auf denen das Fahrzeug innerhalb des Parkplatzes lokalisiert werden kann, wobei der Steuerungsmechanismus (41) dafür konfiguriert ist, diese Liste unter Berücksichtigung des Folgenden zu berechnen:
der Informationen, die in den Daten A und den Daten B enthalten sind,
einer geschätzten theoretischen Zeit, die jeder Route zugeordnet ist, die zwischen dem Kontrollpunkt, der das letzte Mal das Nummernschild las, und jeder der Parkflächen des Parkplatzes, die in einem Zeitintervall nach dem Moment, in dem das Nummernschild dieses letzte Mal gelesen wurde, besetzt waren, liegt; und
des Moduls der Differenz zwischen der geschätzten theoretischen Zeit, die für jede Route, die zwischen jenem letzten Lesepunkt und jeder Parkfläche liegt, ermittelt wurde, und der Zeit, die zwischen jenem letzten Lesevorgang und der Zeit, in der jede der Parkflächen besetzt ist, verstrichen ist.

2. System (10) nach Anspruch 1, **dadurch gekennzeichnet, dass** die Ausgabemittel (5) dafür konfiguriert sind, den Bericht (51) mindestens an ein Gerät zu senden, das unter Folgenden ausgewählt ist: ein Mobiltelefon per SMS-Versand, ein PDA, ein Computerbildschirm, ein Drucker und Kombinationen davon.

## Revendications

1. Système (10) pour estimer l'emplacement de véhicules dans des parcs de stationnement, le système comprenant :
- des moyens de lecture (2) configurés pour capturer au moins les informations suivantes correspondant aux premières données A : le numéro de plaque d'immatriculation d'un véhicule accédant à l'intérieur d'un parc de stationnement, les date et heures exactes de cette capture,
- des moyens de détection (3) configurés pour enregistrer, par le biais d'une pluralité de capteurs (31), des deuxièmes données B indiquant un changement d'état de disponibilité, choisi parmi libre et occupé, des places du parc de stationnement, lesdites deuxièmes données B comportant au moins les informations suivantes : le numéro des places, l'état de disponibilité des places, les date et heure exactes à laquelle un véhicule s'est garé sur la place,
- des moyens d'entrée (1) configurés pour saisir manuellement un numéro de plaque d'immatriculation correspondant à un véhicule devant être localisé à l'intérieur d'un parc de stationnement,
- des moyens de localisation (4) configurés pour localiser ledit véhicule à l'intérieur du parc de stationnement,
- des moyens de sortie (5) configurés pour générer un rapport (51),
- un premier récepteur (43) configuré pour recevoir des données A, et
- un deuxième récepteur (44) configuré pour recevoir des données B ;
les moyens de lecture (2) et les moyens de détection (3) étant connectés aux moyens de localisation (4), **caractérisé en ce que** les moyens de lecture (2) sont installés dans une pluralité de points de contrôle (21A, 21B, 21C) à l'intérieur du parc de stationnement, chacun des moyens de lecture (2) capturant l'emplacement du point de contrôle dans lequel ils sont installés et incluant lesdites informations dans les premières données A ;
**en ce que** les moyens de localisation (4), en faisant usage des informations enregistrées précédemment par le biais :
des moyens d'entrée (1),
du premier récepteur (43), et
du deuxième récepteur (44),
et au moyen d'un mécanisme de contrôle (41) comportant des calculs de probabilité, peuvent déterminer une liste des places possibles auxquelles le véhicule peut être garé à l'intérieur du parc de stationnement, ledit mécanisme de contrôle (41) étant configuré pour calculer la liste mentionnée en tenant compté :
des informations contenues dans les données A et les données B mentionnées,
d'un temps théorique estimé associé à chaque trajet compris entre le point de contrôle qui a pris une dernière lecture de plaque d'immatriculation et chacune des places du parc de stationnement qui ont été occupées dans un intervalle de temps après le moment auquel cette dernière lecture de la plaque d'immatriculation a été prise ; et
du coefficient de la différence entre le temps théorique estimé établi pour chaque trajet existant entre ce dernier point de lecture et chaque place, et le temps écoulé entre le temps auquel cette dernière lecture a été prise et le temps auquel chacune des places est occupée.

2. Système (10) selon la revendication 1, **caractérisé en ce que** les moyens de sortie (5) sont configurés pour envoyer le rapport (51) au moins à un dispositif choisi parmi un téléphone portable, au moyen d'un message SMS, un agent numérique personnel, un écran d'ordinateur, une imprimante et des combinaisons de ceux-ci.
